# EUROPÄISCHE PATENTSCHRIFT

(11) **EP 3 042 010 B1**
(45) Veröffentlichungstag und Bekanntmachung des Hinweises auf die Patenterteilung: **30.10.2019**
(21) Anmeldenummer: 14759102.8
(22) Anmeldetag: 03.09.2014
(51) Int. Cl.: E04H 12/00, E02B 17/00, F03D 80/00

(54) **VERFAHREN ZUR HERSTELLUNG EINES JACKET FÜR EINE WINDKRAFTANLAGE**
METHOD FOR THE PRODUCTION OF A JACKET FOR A WIND TURBINE
PROCEDE DE FABRICATION DES TREILLIS POUR UNE EOLIENNE

(30) Priorität: 04.09.2013 DE 102013015299
(43) Veröffentlichungstag der Anmeldung: 13.07.2016
(73) Patentinhaber: Kelemen, Peter, 38239 Salzgitter (DE)
(72) Erfinder: Kelemen, Peter, 38239 Salzgitter (DE)
(74) Vertreter: Friedrich, Andreas
(86) Internationale Anmeldenummer: PCT/EP2014/002387
(87) Internationale Veröffentlichungsnummer: WO 2015/032495

(56) Entgegenhaltungen:
- EP-A2- 0 296 957
- DE-A1-102010 026 117
- GB-A- 2 205 915
- US-A- 3 111 207
- US-A- 4 842 446
- US-E- R E35 912

## Beschreibung

Die Erfindung betrifft ein Verfahren zum Herstellen eines Jackets für eine Windkraftanlage in einer aufrechten Position, wobei das Jacket wenigstens drei Beine einer Länge L und eine Mehrzahl von Streben aufweist, die sich zwischen jeweils zwei Beinen erstrecken, wobei zumindest über einen Großteil der Länge L Streben zwischen den Beinen angeordnet sind, die keine anderen Streben kreuzen, wobei in unterschiedlichen Bereichen der Beine jeweils zwei Streben auf das Bein treffen, die nur zu einem der benachbarten Beine verlaufen. Ein derartiges Jacket ist beispielsweise aus der EP 1 399 631 B1 bekannt.

Bei einem sogenannten Jacket handelt es sich um eine Gründungsstruktur zum Befestigen insbesondere einer Off-Shore-Windkraftanlage am Meeresboden. Sie sind oftmals als vierbeinige fachwerkartige Stahlkonstruktion ausgebildet. Natürlich sind auch Jackets mit anderen Beinanzahlen bekannt. An den unteren Enden der Beine sind oftmals Hülsen angeordnet, die beispielsweise in den Meeresboden eingerammte Fundamentpfähle aufnehmen und so für eine Verankerung des Jackets am Meeresboden sorgen. Am oberen Ende des Jackets, das bei Off-Shore-Windkraftanlagen herkömmlicherweise oberhalb des Wasserspiegels angeordnet ist, befindet sich ein Verbindungselement. Daran wird der eigentliche Turm der Windkraftanlage, an dessen oberem Ende sich die Gondel mit dem Rotor befindet, positioniert.

Jackets haben gegenüber anderen Gründungsstrukturen den Vorteil, auch bei relativ großen Wassertiefen eine ausreichende Stabilität zu gewährleisten und gleichzeitig eine relativ kleine Angriffsfläche für Wellen und für Meeresströmungen, wie beispielsweise Ebbe und Flut, zu bieten.

Herkömmlicherweise befinden sich zwischen den jeweiligen Beinen des Jackets Streben, die kreuzweise angeordnet sind. Dies hat eine gute Stabilität und eine sehr große Verwindungssteifigkeit des Jackets zur Folge, was insbesondere bei Off-Shore-Windkraftanlagen durch die großen Belastungen durch Meeresströmungen und/oder Wellengang von Vorteil ist.

Jackets werden beispielsweise Wassertiefen von bis zu 60 Metern eingesetzt und müssen entsprechend groß dimensioniert werden. Der Abstand zwischen zwei Beinen des Jackets kann dabei leicht über 25 Meter betragen. Nachteilig ist, dass die Herstellung und Konstruktion der Jackets aufwändig und kompliziert und damit teuer ist. Die gekreuzten Streben, die zwischen den Beinen des Jackets angeordnet sind, werden bei der Herstellung herkömmlicherweise als separates Bauteil bereits kreuzförmig angeliefert und müssen zwischen den jeweiligen Beinen, zwischen denen sie sich erstrecken sollen, positioniert werden. Auch diese Streben können folglich eine Länge von 20 Metern bis 30 Metern leicht erreichen und müssen dennoch so gefertigt sein, dass alle vier Enden der beiden gekreuzten Streben an den jeweiligen als vorgefertigtes Bauteil vorliegenden Beinen befestigt werden können. Dies bedeutet, dass trotz der enormen Abmessungen der Streben und der Beine des Jackets sehr geringe Fertigungstoleranzen eingehalten werden müssen. Eine Abweichung von nur wenigen Zentimetern, beispielsweise bei der Länge einer der beiden Streben, kann dazu führen, dass aufwändig Zwischenstücke gefertigt und angesetzt werden müssen oder dass die beiden gekreuzten Streben gar nicht verwendet werden können.

Hinzu kommt, dass bei der Verwendung gekreuzter Streben eine Vielzahl von aufwändigen Konturschweißungen nötig ist, da sowohl die Beine als auch die Streben rohrförmig ausgebildet sind. Diese Schweißungen müssen oftmals ungeschützt auf der Baustelle (Werft) durchgeführt werden, was aufwändig und teuer und insbesondere bei schlechtem Wetter kaum möglich ist. Zudem müssen die Stellen der Beine, an denen die einzelnen Streben angeordnet sind, gesondert verstärkt werden. Herkömmlicherweise treffen dabei in einem Bereich eines Beines des Jackets vier Streben aufeinander, die alle durch komplizierte Konturschweißungen im gleichen Bereich des Beins befestigt werden müssen, das hierfür besonders ausgebildet sein muss. So sind die Strebekreuze oftmals so dicht übereinander zwischen den Beinen angeordnet, dass die oberen Enden des unteren Kreuzes und die unteren Enden des oberen Kreuzes sehr nahe beieinander auf das jeweilige Bein treffen. Dies gilt jedoch nicht nur für ein beispielsweise dem ersten Bein im Uhrzeigersinn benachbartes Bein, sondern auch für das in entgegengesetzter Richtung benachbarte Bein, so dass in dem Bereich, in dem die Streben an die Beine treffen, oftmals vier Streben auf engstem Raum angeordnet werden müssen. Auch dies verkompliziert die Herstellung und macht den Aufbau des Jackets langwierig, kompliziert und teuer.

Aus der DE 38 19 233 C2 ist eine Tragstruktur für Offshore-Plattformen für die Öl- und Gasprospektion und/oder -produktion bekannt, die, außer dass sie nicht für Windkraftanlagen ausgelegt ist, alle Merkmale des Oberbegriffs des Anspruchs 1 offenbart.

Die EP 2 067 913 A2 hingegen offenbart Gitterstrukturen für Offshore-Bauwerke, bei denen die einzelnen Knotenelemente, an denen Streben an Beine angrenzen, als separate Bauteile ausgelegt werden.

Die DE 10 2010 026 117 A1 des Anmelders offenbart die Tragstruktur für eine Off-Shore-Windkraftanlage, bei der zwischen den einzelnen Beinen Streben angeordnet sind. In den Bereichen der Beine, an denen die Streben angeordnet sind, treffen jedoch jeweils Streben auf das Bein, die zu unterschiedlichen Beinen verlaufen. Gleiches gilt für die GB 2 205 915 A, auch wenn hier eine kompliziertere Struktur aus Beinen und Streben beschrieben wird. In unterschiedlichen Bereichen der Beine treffen Streben auf die Beine, die die Beine mit verschiedenen anderen Beinen verbinden.

Dies ist auch bei der US 4, 842, 446 sowie der US RE 35, 912 der Fall. EP0296957A2 offenbart ein Verfahren zum aufstellen von Gittertürmen gemäß dem Stand der Technik.

Der Erfindung liegt daher die Aufgabe zugrunde, ein Herstellungs- und Montageverfahren für ein derartiges Jacket vorzuschlagen.

Bei einem bevorzugten Jacket für eine Windkraftanlage ist zwischen jeweils zwei Streben eine vertikale und/oder horizontale Verbindung angeordnet. Bei einem gemäß Anspruch 1 herzustellenden Jacket sind die Streben und Beine folglich so angeordnet, dass zumindest über einen Großteil der Länge L Streben zwischen den Beinen angeordnet sind, die keine anderen Streben kreuzen. Durch diese einfache Maßnahme wird überraschenderweise erreicht, dass die Fertigungstoleranzen, die bei der Herstellung der Streben eingehalten werden müssen, deutlich großzügiger gewählt werden können. Insbesondere müssen die Streben in ihrer Länge nicht so exakt gearbeitet werden.

Wird beispielsweise eine der Streben nicht in der exakten gewünschten Länge geliefert, sondern weist eine etwas abweichende Länge auf, kann einfach der Neigungswinkel der betreffenden Strebe zwischen den beiden betroffenen Beinen leicht geändert werden, ohne dass dies für die Statik des Jackets nachteilige Auswirkungen hätte. Dies ist bei einer gekreuzten Verstrebung nicht möglich.

Dabei sollen die Streben zumindest über den Großteil der Länge L derart angeordnet sein, dass sie einander nicht kreuzen. Mit dem Großteil der Länge L ist dabei mindestens die Hälfte, vorteilhafterweise 3/4, besonders vorzugsweise 4/5 der Länge L gemeint. Optimalerweise sind die Streben über die gesamte Länge L der Beine entsprechend angeordnet, dass sie einander nicht kreuzen. Aus statischen Gründen kann hier das jeweils unterste Jacketsegment, das mit den Fundamenten im Meeresboden verbunden wird, eine Ausnahme bilden, so dass im Bereich des Meeresbodens ein Jacketsegment vorhanden sein kann, das gekreuzte Streben aufweist.

In einer besonders bevorzugten Ausgestaltung lässt sich das Jacket zumindest über den Großteil der Länge L zumindest gedanklich in im Wesentlichen K-förmige Bestandteile zerlegen. Dadurch werden nicht nur die bereits beschriebenen Vorteile der einander nicht kreuzenden Streben verwirklicht, sondern zusätzlich erreicht, dass an den Stellen der Beine des Jackets, an denen Streben angeordnet sind, die am jeweiligen Bein angeordneten Streben alle in der gleichen Ebene von dem jeweiligen Bein weg führen.

Bei Jackets mit gekreuzten Streben müssen, wie bereits dargelegt, in manchen Bereichen der Beine vier Streben auf sehr geringem Raum am jeweiligen Bein befestigt werden. Dabei verlaufen zwei der Streben zum rechten und zwei der Streben zum linken Nachbarbein des jeweiligen Beins. Lässt sich das Jacket wie in dieser bevorzugten Ausgestaltung beansprucht, zumindest in Gedanken in im Wesentlichen "K"-förmige Bestandteile zerlegen, tritt dieser Fall nicht ein. An den Stellen der Beine, an denen die Streben angeordnet sind, treffen nur zwei Streben auf das jeweilige Bein, die beide mit dem rechten Nachbarbein oder dem linken Nachbarbein verbunden sind. Auch dadurch wird eine Herstellung und Vorfertigung der Einzelteile für das Jacket deutlich erleichtert und der Aufbau beschleunigt.

Vorteilhafterweise gibt es bei einem derartigen Jacket ausschließlich geneigte Streben. Geneigt bedeutet in diesem Fall, dass sie weder vertikal, also der Schwerkraft folgend, noch horizontal, also senkrecht zu vertikal, angeordnet sind. Dadurch wird eine hohe Verwindungs- und Biegesteifigkeit des Jackets erreicht. Insbesondere weisen alle Streben einen Neigungswinkel von mehr als 50 Grad gegen die Vertikale auf.

Vorzugsweise ist zwischen jeweils zwei Streben eine vertikale und/oder eine horizontale Verbindung angeordnet. Dadurch wird die Verwindungssteifigkeit und Stabilität des Jackets weiter erhöht. Die Verbindungen zwischen den einzelnen Streben sind deutlich kürzer als die benötigten Segmente der Beine oder die Länge der Streben, so dass sie deutlich einfacher mit den geringen geforderten Toleranzen herstellbar sind.

Dabei hat sich als vorteilhaft herausgestellt, wenn die vertikalen und/oder horizontalen Verbindungen in der Mitte der jeweiligen Streben angeordnet sind. Eine in der Mitte der Strebe angeordnete Verbindung befindet sich folglich auf halbem Weg der Strebe von dem einen Bein zum anderen Bein des Jackets.

Sind zwischen allen Streben, die sich zwischen zwei benachbarten Beinen befinden, jeweils vertikale Verbindungen angeordnet, ergibt sich eine vertikale Struktur, die sich nahezu über die Gesamtlänge L der Beine des Jackets erstreckt. Horizontale Verbindungen hingegen, die zwischen einzelnen Streben angeordnet sind, ergeben je nach der Anzahl der Beine des Jackets Polygone, die horizontal angeordnet sind und die Verwindungssteifigkeit des Jackets deutlich erhöhen. Verfügt das Jacket beispielsweise über drei Beine, werden durch horizontale Verbindungen zwischen den einzelnen Streben Dreiecke erzeugt, die neben der Erhöhung der Verwindungssteifigkeit zudem dafür sorgen, dass auch Schwingungen der Streben, die durch die Länge der Streben und die im Vergleich zu den gekreuzten Streben fehlenden Kreuzungspunkte bei der Einwirkung von Wind, Wellen und Gezeiten und insbesondere durch den Betrieb der Windkraftanlage durchaus auftreten können, gedämpft oder gänzlich vermieden werden. Auf diese Weise wird nicht nur die Stabilität des Jackets, sondern auch die Lebensdauer des Jackets erhöht, da die durch die Schwingungen auftretenden mechanischen Belastungen vermieden oder zumindest verringert werden.

Somit treffen folglich in unterschiedlichen Bereichen der jeweiligen Beine des Jackets jeweils zwei Streben auf das jeweilige Bein, die jedoch immer nur zu einem der benachbarten Beine verlaufen. Sind in einem ersten Bereich die beiden anzuordnenden Streben beispielsweise Verbindungsstreben mit dem rechten Nachbarbein, sind die in sich anschließenden Bereich anzuordnenden Streben Verbindungen zum linken Nachbarbein.

Die Beine des Jackets können in aus dem Stand der Technik prinzipiell bekannter Weise mit Fundamenten der Windkraftanlage im Meeresboden verbindbar sein. Am dieser Verbindung entgegengesetzten Ende der Beine kann ein Übergangsstück angeordnet werden, das den Übergang zwischen dem Jacket und einem sich an dem Ende des Jackets anzuordnenden Turm für die Windkraftanlage bildet. Die Beine selbst können parallel zueinander oder leicht geneigt zueinander angeordnet sein, so dass sich das Jacket nach oben hin verjüngt. Vorteilhafterweise verfügt das Jacket über drei oder vier Beine. Es sind jedoch auch Jackets mit einer größeren Anzahl, beispielsweise sechs, acht oder zehn Beinen möglich.

Ein Verfahren zum Herstellen eines derartigen Jackets in einer liegenden Positionkann beispielsweise folgende Schritte aufweisen:
a) Positionieren eines ersten Beines und eines zweiten Beines in einem vorbestimmten Abstand zueinander,
b) Positionieren einer Mehrzahl von Streben zwischen dem ersten Bein und dem zweiten Bein,
c) Verbinden der Streben mit dem ersten Bein und dem zweiten Bein zu einer ersten Teilstruktur,
d) Positionieren wenigstens eines dritten Beines oberhalb der ersten Teilstruktur,
e) Positionieren einer Mehrzahl von Streben zwischen der ersten Teilstruktur und dem wenigstens einem dritten Bein,
f) Verbinden der Streben mit der ersten Teilstruktur und dem wenigstens einem dritten Bein.

Auf diese Weise lassen sich insbesondere Jackets mit drei Beinen auf besonders einfache, schnelle und damit kostengünstige Weise herstellen. Zunächst werden das erste Bein und das zweite Bein in einem vorbestimmten Abstand zueinander positioniert. Dies kann auf Werkbänken, Arbeitstischen oder dem Fußboden einer Produktionshalle erfolgen. Dabei können das erste Bein und/oder das zweite Bein aus mehreren Beinsegmenten zusammengesetzt werden, die beispielsweise separat und vorab hergestellt und vorbereitet wurden. Die Bereiche, in denen Streben an dem jeweiligen Bein angeordnet werden sollen, können dabei beispielsweise mit einer dickeren Wandung ausgebildet werden, um in diesem Bereich die nötige Stabilität zu erreichen und in den Bereichen zwischen diesen sogenannten Knotenbereichen eine Materialeinsparung zu erlangen. Die einzelnen Beinsegmente können dabei eine Länge von 10 bis 25 Metern aufweisen und für den Verfahrensschritt a) zusammengesetzt werden.

Die Streben, die zwischen den Beinen positioniert werden, werden vorteilhafterweise ebenfalls vorbereitet angeliefert. Sie können beispielsweise aus einem Mittelbereich und zwei an dessen Enden angeordneten Endstücken bestehen, wobei der Mittelbereich beispielsweise eine Länge von 18 Metern aufweisen kann. Im Mittelbereich handelt es sich bei der Strebe um ein Stahlrohr mit einer vorbestimmten Wandungsstärke, die an die zu erwartenden Belastungen und die Länge der Strebe angepasst wird. An die beiden Enden dieses Mittelbereiches kann jeweils ein Endstück angesetzt sein, das mit einer Seite an das jeweilige Ende des Mittelbereichs angeschweißt wird. Dabei handelt es sich um eine Orbitalschweißung, die einfach, schnell und kostengünstig herstellbar ist. Das andere Ende des jeweiligen Endstückes ist bereits für eine Konturschweißung vorbereitet und weist die entsprechende Struktur auf.

Die Streben werden im Verfahrensschritt b) zwischen den beiden Beinen positioniert, an denen sie befestigt werden sollen. Hier sind Fertigungstoleranzen von bis zu 20 mm problemlos ausgleichbar, indem der Neigungswinkel, in dem die Strebe an dem jeweiligen Bein angeordnet wird, auf die Länge der Strebe angepasst wird. Die so positionierten Streben werden in ihrer Lage gesichert und anschließend durch Konturschweißung mit dem ersten Bein und dem zweiten Bein zu einer ersten Teilstruktur verbunden.

Soll ein Jacket mit nur drei Beinen hergestellt werden, wird anschließend das dritte Bein oberhalb dieser ersten hergestellten Teilstruktur angeordnet, wobei die Position beispielsweise durch Stützgestelle gehalten wird. Zwischen dieser ersten Teilstruktur und dem wenigstens einen dritten Bein werden nun in gleicher Weise die Streben angeordnet und Fertigungstoleranzen entsprechend ausgeglichen.

Zu Beginn oder zum Schluss können am unteren Ende der jeweiligen Beine beispielsweise Ankerhülsen angeordnet werden, durch die eine spätere Verbindung des Jackets mit im Meeresboden befindlichen Fundamenten ermöglicht wird.

Vorteilhafterweise wird im Verfahrensschritt d) eine zweite Teilstruktur aus einem dritten Bein, einem vierten Bein und einer Mehrzahl von Streben, die mit dem dritten Bein und dem vierten Bein verbunden sind, oberhalb der ersten Teilstruktur positioniert. Auf diese Weise ist es einfach möglich, ein Jacket mit vier Beinen herzustellen. Die zweite Teilstruktur wird dabei analog zur ersten Teilstruktur hergestellt und anschließend in der gewünschten Position beispielsweise über Stützgerüste oder an von der Decke hängenden Kränen befestigt. Das anschließende Positionieren der Streben und Verbinden der Streben mit den beiden Teilstrukturen funktioniert analog zu dem bereits beschriebenen Verfahren.

Als besonders vorteilhaft hat sich herausgestellt, wenn an dem ersten Bein und an dem zweiten Bein eine Mehrzahl von Anschlussstücken angeordnet ist, und wenn das erste Bein und das zweite Bein im Verfahrensschritt a) in einem Abstand zueinander angeordnet werden, der so groß ist, dass die Streben im Verfahrensschritt b) auf die Anschlussstücke aufgefädelt werden können.

Auch bei dieser Ausgestaltung des Verfahrens können Beinsegmente wieder vorgefertigt angeliefert werden. Auch hier bestehen die Beine aus Knotenbereichen, in denen sie mit Streben verbunden werden sollen, und Zwischenbereichen, die eine im Vergleich zu den Knotenbereichen geringere Wandstärke aufweisen können. Die Lieferlänge entsprechender Beinsegmente kann wieder zwischen 10 und 25 Metern betragen.

In den Knotenbereichen der Beinsegmente befinden sich Anschlussstücke, die mit Konturschweißungen in dem jeweiligen gewünschten Winkel am jeweiligen Beinsegment angeordnet sind.

Die Streben selbst können in diesem Fall als einfache Rohre ausgebildet sein, die nicht über spezielle Endstücke verfügen müssen. Die Streben sind vorteilhafterweise als geschweißtes Hohlrohr ausgebildet, dessen Innendurchmesser so groß ist, dass das jeweilige Hohlrohr, das die Strebe bildet, auf das Anschlussstück aufgefädelt werden kann. Dieses Auffädeln auf die Anschlussstücke bildet den Verfahrensschritt b), in dem die Streben relativ zu dem ersten Bein und dem zweiten Bein positioniert werden. Vorteilhafterweise sind die einander gegenüberliegenden Anschlussstücke auf dem ersten Bein und auf dem zweiten Bein, die gemeinsam die gleiche Strebe tragen sollen, unterschiedlich lang ausgebildet, so dass ein Einfädeln dergestalt leicht möglich ist, dass die Strebe, die als Hohlrohr ausgebildet ist, an beiden Enden jeweils eines der Anschlussstücke umgibt, und somit zwischen den beiden Beinen des Jackets positioniert ist. Dabei ist die Strebe jedoch entlang ihrer Längsrichtung verschiebbar und kann in die gewünschte Position gebracht werden.

Vorzugsweise werden das erste Bein und das zweite Bein vor dem Verbinden der Streben mit dem ersten Bein und dem zweiten Bein im Verfahrensschritt c) aufeinander zu verschoben. Damit wird der Abstand zwischen den beiden Beinen so stark verringert, dass die Streben nicht mehr von den Anschlussstücken gelöst werden können. Anschließend werden im Verfahrensschritt c) die Streben mit den Anschlussstücken und damit auch mit den Beinsegmenten und den Beinen des Jackets verbunden. Fertigungstoleranzen bei der Länge der Streben können auf diese Weise besonders einfach ausgeglichen werden, da eine exakte Konturschweißung zwischen der Strebe und dem Beinsegment bzw. dem Bein des Jackets nicht nötig ist. Vielmehr wird die jeweilige Strebe an ihren beiden Enden mit dem jeweiligen Anschlussstück des Beines durch ein Orbitalschweißen verschweißt, das an nahezu jeder Position entlang der Länge des Anschlussstückes stattfinden kann.

Vorteilhafterweise ist an dem wenigstens einem dritten Bein eine Mehrzahl von Anschlussstücken angeordnet, wobei das wenigstens eine dritte Bein und die erste Teilstruktur im Verfahrensschritt d) in einem Abstand zueinander angeordnet werden, der so groß ist, dass die Streben im Verfahrensschritt e) auf die Anschlussstücke aufgefädelt werden können.

Als vorteilhaft hat sich zudem herausgestellt, wenn das wenigstens eine dritte Bein und die erste Teilstruktur vor dem Verbinden der Streben mit der ersten Teilstruktur und dem wenigstens einem dritten Bein im Verfahrensschritt f) aufeinander zu verschoben werden.

Das Auffädeln und das Verbinden der Streben mit den Anschlussstücken bzw. dem jeweiligen Bein geschehen dabei analog zu dem bereits beschriebenen Vorgang. Natürlich ist dies auch möglich, wenn statt eines dritten Beines eine zweite Teilstruktur verwendet wird, die vorzugsweise wie die bereits beschriebene erste Teilstruktur hergestellt wird. Auch die Beine der zweiten Teilstruktur verfügen folglich über die bereits beschriebenen Anschlussstücke.

Werden die hier beschriebenen Anschlussstücke verwendet, um die Streben zu erhalten und in die als Hohlrohr ausgebildeten Streben eingeführt zu werden, können die beiden Anschlussstücke, die für jede Strebe vorhanden sind, identisch ausgebildet werden. Es ist jedoch auch möglich, sie beispielsweise unterschiedlich lang oder mit unterschiedlicher Neigung der Stirnfläche auszubilden. So ist es insbesondere möglich, eines der beiden Anschlussstücke mit einem Sicherungsbügel auszubilden, dessen Stirnfläche insbesondere auf einer Seite geneigt ist, um so das Auffädeln der Strebe auf das jeweilige Anschlussstück zu erleichtern.

Die Erfindung löst die gestellte Aufgabe durch ein Verfahren zum Herstellen eines hier beschriebenen Jackets in einer aufrechten Position, wobei sich das Jacket nach oben hin verjüngt und das Jacket aus einer Mehrzahl von Ringsegmenten mit unterschiedlichen Durchmessern hergestellt wird, die jeweils wenigstens ein Beinsegment jedes der wenigstens drei Beine und jeweils der wenigstens einer zwischen zwei benachbarten Beinen angeordneten Strebe aufweisen, wobei das Verfahren folgende Schritte aufweist:
A) Positionieren der zu verbauenden Ringsegmente derart, dass jedes der Ringsegmente die Ringsegmente mit kleinerem Durchmesser umgibt,
B) Anheben des jeweils größten noch nicht verbauten der so positionierten Ringsegmente,
C) Absetzen des jeweils angehobenen Ringsegmentes auf dem jeweils vorherigen Ringsegment und
D) Wiederholen der Schritte b) und c) bis alle Ringsegmente übereinander angeordnet sind.

Diese Art der Herstellung des Jackets ist insbesondere für die Errichtung an Land beispielsweise für Windkraftanlagen von Vorteil. Die einzelnen Ringsegmente werden übereinander gestellt, so dass die einzelnen Beinsegmente, die in den unterschiedlichen Ringsegmenten enthalten sind, so aneinander befestigt werden können, dass sie gemeinsam die Beine des Jackets bilden. Da sich das Jacket nach oben hin verjüngt, verfügen sämtliche Ringsegmente über unterschiedliche Durchmesser, so dass sie ineinander geschachtelt aufgestellt werden können. Dabei umgibt jedes der Ringsegmente die Ringsegmente, die einen kleineren Durchmesser aufweisen und damit an einer höheren Position des errichteten Jackets angeordnet werden müssen.

Auf diese Weise lässt sich die eine platzsparende Anordnung der einzelnen Ringsegmente erreichen, wobei die Segmente zusätzlich in der richtigen Reihenfolge angeordnet werden. Zum Errichten des jeweiligen Jackets muss nun jeweils das größte dieser Ringsegmente, das folglich alle anderen noch nicht verbauten Ringsegmente umgibt, angehoben werden und auf dem vorigen Ringsegment positioniert und befestigt werden.

In einer bevorzugten Ausgestaltung werden die zu verbauenden Ringsegmente innerhalb eines Basisringsegmentes angeordnet. Dieses Basisringsegment, das beispielsweise auf im Erdreich eingegossenen Betonfundamenten angeordnet ist, weist folglich den größten Durchmesser der einzelnen Ringsegmente auf. Das zweitgrößte Ringsegment, das als erstes angehoben werden muss, wird nun vom Lagerplatz, der sich innerhalb des Basisringsegmentes befindet, angehoben und mit seinen Beinsegmenten auf den Beinsegmenten des Basisringsegmentes positioniert. Dazu muss es gegebenenfalls etwas verdreht werden, um die einzelnen Beinsegmente der unterschiedlichen Ringsegmente aneinander vorbeiführen zu können.

Durch ein Jacket gemäß einem Ausführungsbeispiel der vorliegenden Erfindung wird folglich eine leicht zu montierende, einfach zerlegbare und kostengünstig aufzustellende Lösung für ein Jacket vorgeschlagen. In einer besonders bevorzugten Ausgestaltung können beispielsweise die Verbindungen, die zwischen den einzelnen Streben angeordnet sind, mit diesen Streben nicht nur biegesteif, sondern beispielsweise auch über ein Gelenk verbunden werden. Auf diese Weise werden die insbesondere auch durch den Betrieb der Windkraftanlage selbst hervorgerufenen Schwingungen der oftmals langen Streben deutlich besser verringert und so die mechanische Beanspruchung der Schweißnähte nochmals deutlich reduziert.

Mit Hilfe einer Zeichnung wird nachfolgend ein Ausführungsbeispiel der vorliegenden Erfindung näher erläutert. Es zeigt:
- Figur 1: - die schematische Darstellung eines 3-beinigen Jackets,
- Figur 2: - die schematische Darstellung eines Beinsegmentes,
- Figur 3a und 3b: - zwei unterschiedliche Ausgestaltungen eines Anschlussstückes;
- Figur 4a bis 4d: - die schematische Darstellung unterschiedlicher Zustände beim Auffädeln einer Strebe auf die Anschlussstücke,
- Figur 5: - die schematische Darstellung aufgefädelter Streben zwischen zwei Beinen,
- Figur 6a und 6b: - die schematische Darstellung eines Jackets vor und nach dem Absenken des dritten Beins,
- Figur 7a und 7b: - die schematische Darstellung eines Beinsegmentes und einer Strebe,
- Figur 8: - die schematische Darstellung von zwischen zwei Beinen angeordneten Streben,
- Figur 9a bis 9d: - unterschiedliche Stadien beim Positionieren einer Strebe zwischen zwei Beinen,
- Figur 10: - schematische Darstellung eines Basisringsegmentes und
- Figur 11: - die schematische Darstellung eines teilweise aufgebauten Jackets.

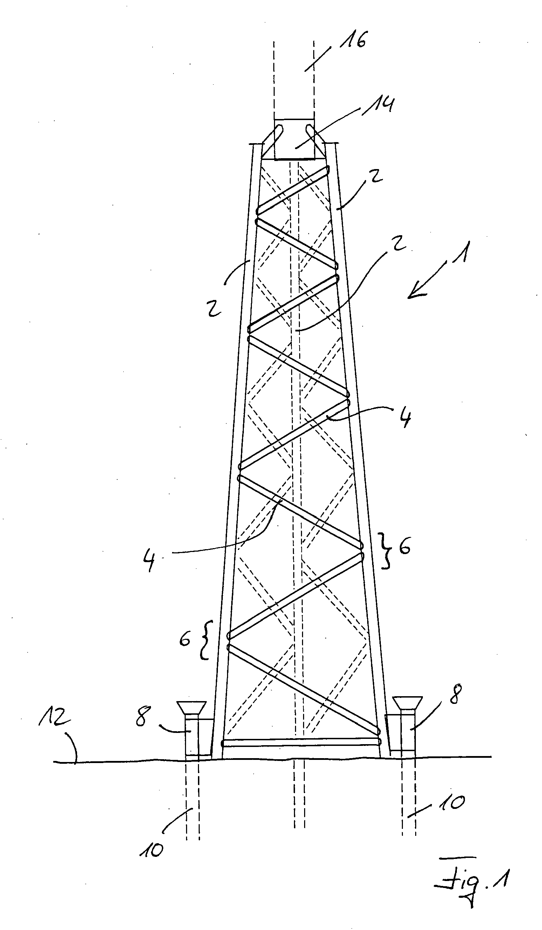

Figur 1 zeigt ein Jacket 1 der hier beschriebenen Art.

Das Jacket verfügt über drei Beine 2, zwischen denen eine Mehrzahl von Streben 4 angeordnet ist. Man erkennt, dass in einem Knotenbereich 6, in dem Streben 4 mit dem jeweiligen Bein 2 verbunden sind, jeweils immer nur zwei Streben 4 mit dem jeweiligen Bein 2 zu verbinden sind. Diese beiden Streben 4 verbinden das Bein 2, in dem sich der Knotenbereich 6 befindet, mit entweder dem rechten oder dem linken Nachbarbein 2, nie jedoch mit unterschiedlichen Nachbarbeinen 2.

Die Streben 4 sind so angeordnet, dass sie sich über die gesamte Länge L der Beine 2 nicht kreuzen. Dadurch lassen sich die Fertigungstoleranzen deutlich besser ausgleichen.

Im unteren Bereich der Beine 2 sind Ankerhülsen 8 angeordnet, durch die Gründungsrohre 10 in den Meeresboden 12 getrieben werden können. Am oberen Ende der Beine 2 befindet sich ein Verbindungselement 14, das eine Verbindung des Jackets 1 zu einem nur im Ansatz gestrichelt dargestellten Turm 16 der Windenergieanlage herstellt.

Das in Figur 1 gezeigte Jacket 1 ist gedanklich in eine Vielzahl "K"-förmiger Einzelteile zerlegbar.

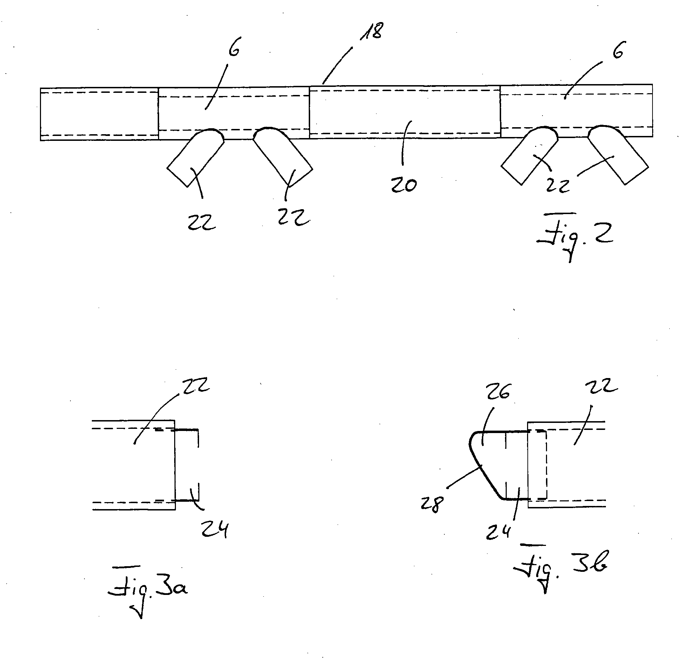

Figur 2 zeigt ein Beinsegment 18, das aus Knotenbereichen 6 und Zwischenbereichen 20 besteht. Durch gestrichelte Linien ist der Innendurchmesser der jeweiligen Knotenbereiche 6 bzw. Zwischenbereiche 20 dargestellt. Man erkennt, dass das Beinsegment 18 im Bereich der Zwischenbereiche 20 eine geringere Wandstärke aufweist, als im Bereich der Knotenbereiche 6. Falls es jedoch statisch ausreichend ist, können die Knotenbereiche 6 und die Zwischenbereiche 20 auch mit der gleichen Wandstärke, vorzugsweise der dünnen Wandstärke der Zwischenbereiche 20, hergestellt werden. Dadurch wird der Herstellungsprozess vereinfacht.

In den Knotenbereichen 6 sind jeweils zwei Anschlussstücke 22 angeordnet, die über jeweils eine Konturschweißung mit dem Knotenbereich 6 des Beinsegmentes 18 verbunden sind.

In den Figuren 3a und 3b sind zwei unterschiedliche Anschlussstücke 22 dargestellt. Während das in Figur 3a dargestellte Anschlussstück 22 eine Innenmanschette 24 aufweist, die aus dem Anschlussstück 22 hervorragt, verfügt das in Figur 3b dargestellte Anschlussstück 22 neben der Innenmanschette 24 zusätzlich über einen Sicherungsbügel 26, der eine abgeschrägte Stirnfläche 28, die ringförmig ausgebildet sein kann, aufweist.

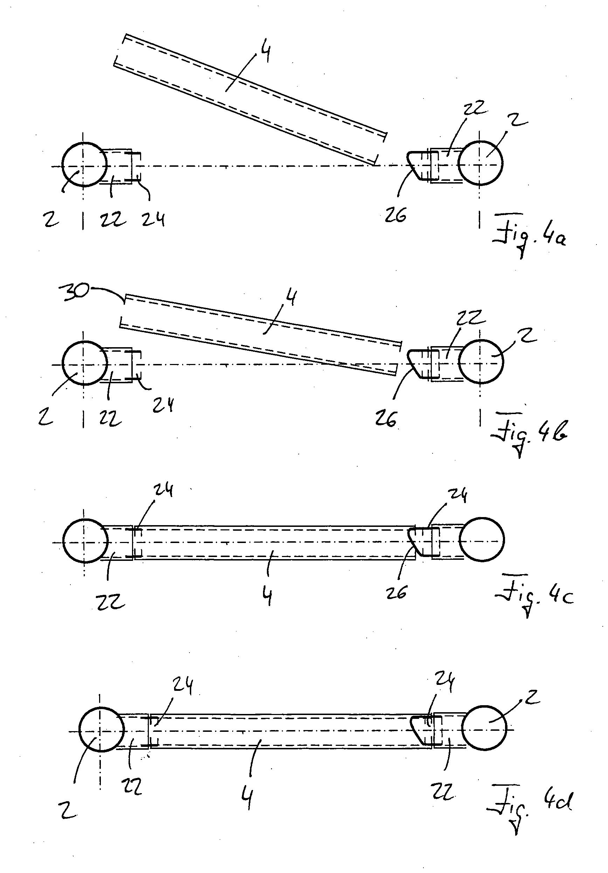

In einer bevorzugten Ausgestaltung werden die in den Figuren 3a und 3b dargestellten Anschlussstücke 22 verwendet, um die beiden Enden einer Strebe 4 aufzunehmen und mit diesen Enden verbunden zu werden. In den Figuren 4a bis 4d sind verschiedene Stadien bei diesem Verbinden dargestellt.

In Figur 4a sind zwei Beine 2 mit jeweils einem daran angeordneten Anschlussstück 22 zu erkennen, wobei das linke Anschlussstück 22 dem in Figur 3a gezeigten Anschlussstück 22 entspricht und über eine hervorstehende Innenmanschette 24 verfügt, während das rechte in Figur 4a gezeigte Anschlussstück 22 zusätzlich den Sicherungsbügel 26 aufweist und dem in Figur 3b gezeigten Anschlussstück 22 entspricht.

Zwischen den beiden Anschlussstücken 22 wird eine Strebe 4 positioniert, die zunächst schräg auf den Sicherungsbügel 26 des rechten Anschlussstückes 22 aufgefädelt wird. Der Zeitpunkt kurz vor diesem Auffädeln ist in Figur 4b gezeigt.

Figur 4c zeigt, dass die Strebe 4 auf beiden Innenmanschetten 24 bzw. dem Sicherungsbügel 26 aufliegt. Die Strebe 4 wird auf den Sicherungsbügel 26 aufgefädelt und soweit auf die Innenmanschette 24 des rechten Anschlussstückes 22 geschoben, bis ein linkes Ende 30 der Strebe 4 an der Innenmanschette 24 des linken Anschlussstückes 22 vorbeigleiten kann. Anschließend wird die Strebe 4 wie in Figur 4c gezeigt nach links verschoben und liegt nun auf der Innenmanschette 24 des linken Anschlussstückes 22 auf. Anschließend werden die beiden Beine 2 aufeinander zu verschoben, so dass sich der Abstand zwischen den beiden Beinen 2 verringert und die Strebe 4 nun auf beiden Innenmanschetten 24 beider Anschlussstücke 22 aufliegt. In diesem Zustand wird die Strebe 4 mit dem jeweiligen Innenmanschetten 24 durch eine einfache Orbitalschweißung verbunden. Dadurch, dass die tatsächliche Position dieser Schweißnaht für die Stabilität der Vorrichtung kaum eine Rolle spielt, können Fertigungstoleranzen insbesondere bei der Länge der Strebe 4 auf diese Weise einfach ausgeglichen werden.

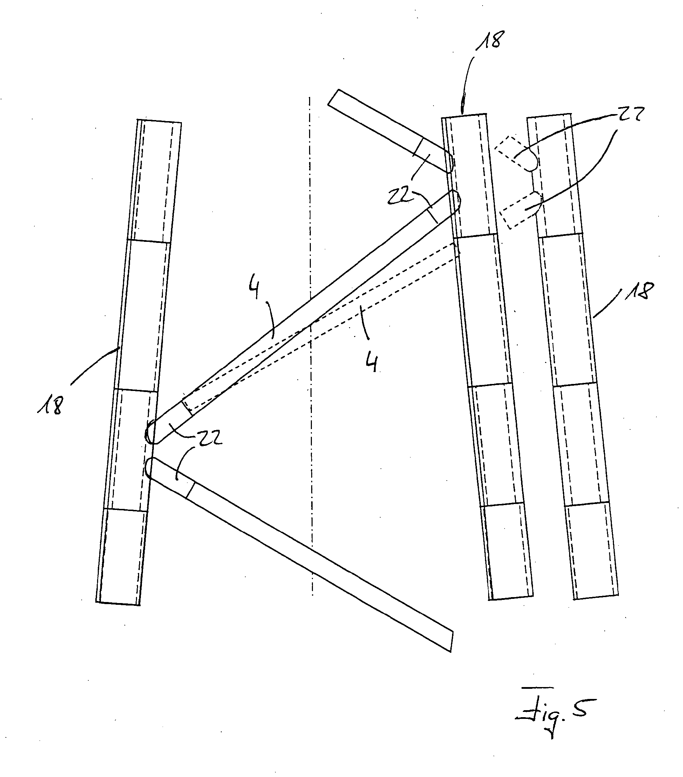

Figur 5 zeigt den entscheidenden Schritt in einer anderen Darstellung. Man erkennt zwei Beinsegmente 18 mit jeweils zwei daran angeordneten Anschlussstücken 22. Durch gestrichelte Linien ist eine Strebe 4 dargestellt, die sich zwischen dem linken Beinsegment 18 und dem rechten Beinsegment 18 befindet, dessen Anschlussstücke 22 ebenfalls gestrichelt dargestellt sind. In dieser Position sind die beiden Beinsegmente 18 im Verfahrensschritt a) positioniert worden. Dieser Abstand ist so groß, dass die Strebe 4, wie in den Figuren 4a bis 4d gezeigt, auf die Anschlussstücke 22 bzw. deren Innenmanschetten 24 aufgefädelt werden kann.

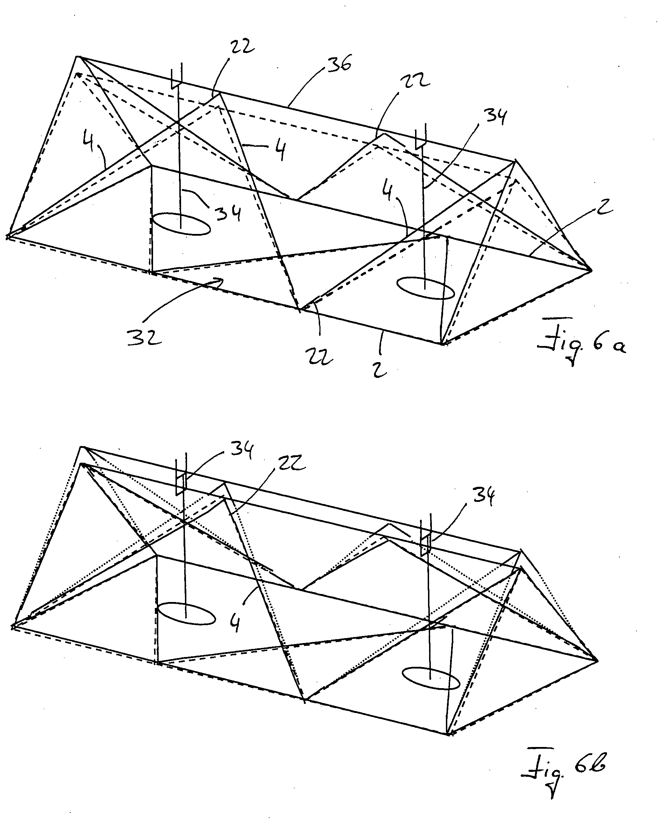

Anschließend werden die Beinsegmente 18 bzw. die Beine 2 aufeinander zu verschoben, so dass in Figur 5 rechts dargestellte Beinsegment 18 nun in den nach rechts verschobenen Position angeordnet ist, in der seine Anschlussstücke 22 mit durchgezogenen Linien dargestellt sind. Auf die Strebe 4, die nun mit den Anschlussstücken 22 verschweißt ist, ist durch durchgezogene Linien dargestellt. Auf diese Weise kann eine erste Teilstruktur 32 erzeugt werden, die aus zwei Beinen 2 und dazwischen angeordneten Streben 4 besteht. Diese erste Teilstruktur 32 ist in Figur 6a auf dem Boden liegend dargestellt. Über zwei schematisch dargestellte Stützen 34 wird ein drittes Bein 36 in einer Position oberhalb der ersten Teilstruktur 22 gehalten. Auch dieser Abstand ist so groß, dass Streben 4 auf Anschlussstücke 22, die sich an den Beinen 2 der ersten Teilstruktur 32 und am dritten Bein 36 befinden, aufgefädelt werden können. Mit durchgezogenen Linien wird dabei die erhöhte Halteposition des dritten Beins 36 sowie der entsprechenden Streben 4 dargestellt. Durch gestrichelte Linien wird die endgültige gewünschte Position sowohl des dritten Beins 36 als auch der Streben 4 dargestellt.

Diese Darstellung ist in Figur 6b umgekehrt. Man erkennt, dass die Stützen 34 abgesenkt werden, so dass der in Figur 4d gezeigte Effekt eintritt und die Streben 4 nun bündig mit den Anschlussstücken 22 abschließen und in diesem Zustand mit den Anschlussstücken 22 verbunden werden können.

Natürlich kann statt des in den Figuren 6a und 6b gezeigten dritten Beines 36 auch eine zweite Teilstruktur verwendet werden, die beispielsweise ebenfalls aus zwei Beinen 2 und dazwischen angeordneten Streben 4 besteht.

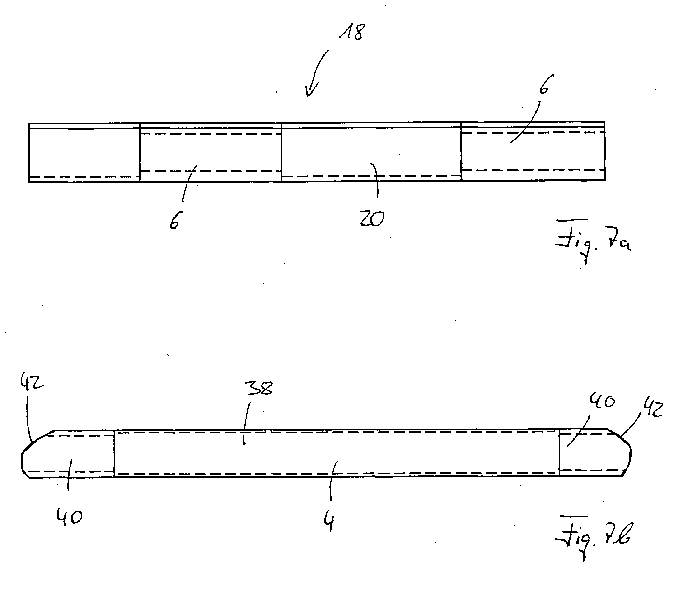

Figur 7a und Figur 7b zeigen ein Beinsegment 18 sowie eine Strebe 4 für ein anderes Ausführungsbeispiel eines Verfahrens zum Aufbauen eines hier beschriebenen Jackets 1. Das Beinsegment 18 besteht wieder aus Knotenbereichen 6 und Zwischenbereichen 20, wobei die Zwischenbereiche 20 wieder eine geringere Wandstärke als die Knotenbereiche 6 aufweisen. Die Streben 4 hingegen bestehen aus einem Mittelbereich 38 und zwei an dessen Enden angeordneten Endstücken 40. Die Verbindung zwischen den Endstücken 40 und dem Mittelbereich 38 erfolgt durch eine Orbitalschweißnaht, die einfach herzustellen ist. Die Endstücke 40 sind an ihrem dem Mittelbereich 38 abgewandten Ende 42 dafür vorbereitet, durch eine Konturschweißung am Knotenbereich 6 des Beinsegmentes 18 angeordnet zu werden.

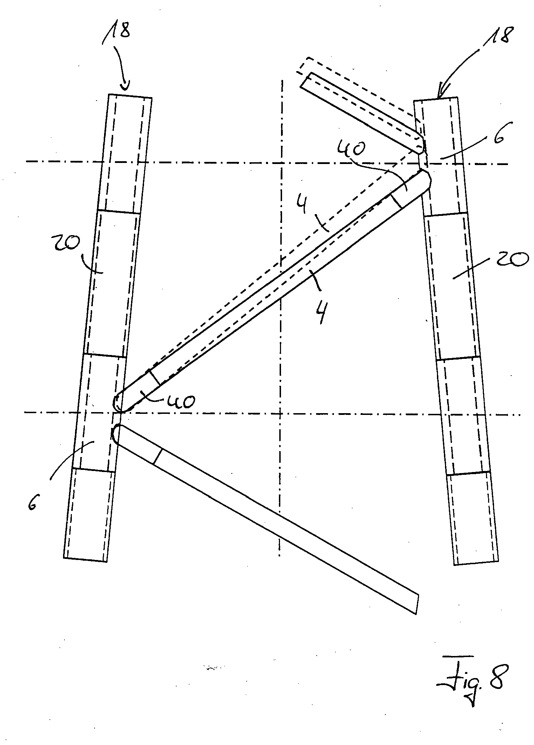

Diese Situation ist in Figur 8 dargestellt. Man erkennt die beiden Beinsegmente 18 mit Knotenbereichen 6 und Zwischenbereichen 20. Zwischen zwei Knotenbereichen 6 der beiden Beinsegmente 18 ist eine Strebe 4 angeordnet, deren Endstücke 40 mit dem jeweiligen Knotenbereich 6 verbunden sind. Durch gestrichelte Linien ist dargestellt, wie Fertigungstoleranzen in diesem Fall ausgeglichen werden können. Während die mit durchgezogenen Linien gezeigte Strebe 4 die optimale Länge aufweist, um zwischen den beiden Beinsegmenten 18 befestigt zu werden, ist die gestrichelte dargestellte Strebe 4 etwas länger ausgebildet. Man erkennt in diesem stark übertrieben dargestellten Beispiel, dass derartige Fertigungstoleranzen problemlos ausgeglichen werden können, indem einfach der Neigungswinkel der Strebe 4 verändert wird.

Durch einen hier beschriebenen Jacket 1 gemäß einem Ausführungsbeispiel der vorliegenden Erfindung ist es möglich, einen Neigungswinkel von immer mehr als 50° gegen die Vertikale zu erreichen.

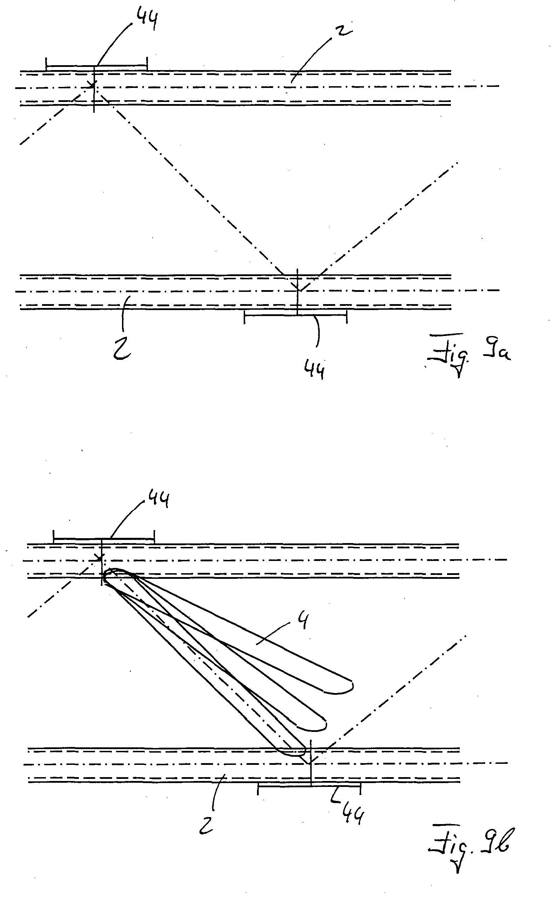

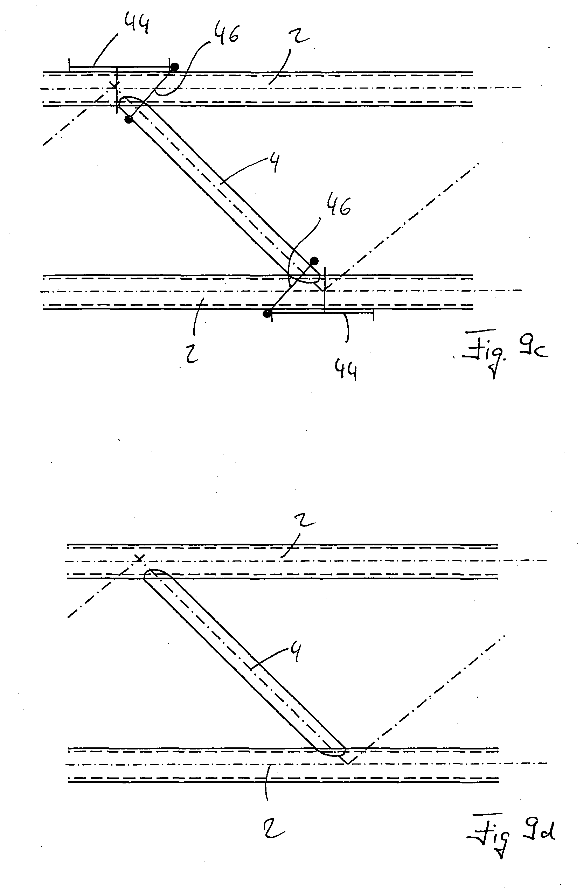

In den Figuren 9a bis 9d sind die verschiedenen Stufen zum Positionieren der Strebe 4 zwischen den Beinen 2 gezeigt. Zunächst werden, wie in Figur 9a dargestellt, die beiden Beine 2 in einem gewünschten Abstand zueinander positioniert. In diesem Fall entspricht dieser Abstand dem endgültigen Abstand, so dass die beiden Beine 2 im weiteren Verlauf des Verfahrens nicht auf einander zu verschoben werden müssen. An den gewünschten Stellen, an denen eine Verbindung zwischen einer Strebe 4 und dem Bein 2 erfolgen soll, wird eine mobile Knagge 44 angeordnet. Nun wird eine Strebe 4 gegen die in Figur 9b obere Knagge 44 angesetzt und, wie es in Figur 9b gezeigt ist, an der unteren Knagge 44 vorbei, an das Bein 2 angeschmiegt. Nun werden, wie in Figur 9c dargestellt ist, die Enden der Strebe 4 in ihren Positionen an den Knaggen 44 durch eine Sicherung 46 fixiert. Nachdem die Knaggen 44 entfernt sind, können die Enden der Strebe 4 an den Beinen 2 befestigt und anschließend die Sicherung 46 entfernt werden. Der fertige Zustand ist in Figur 9d gezeigt.

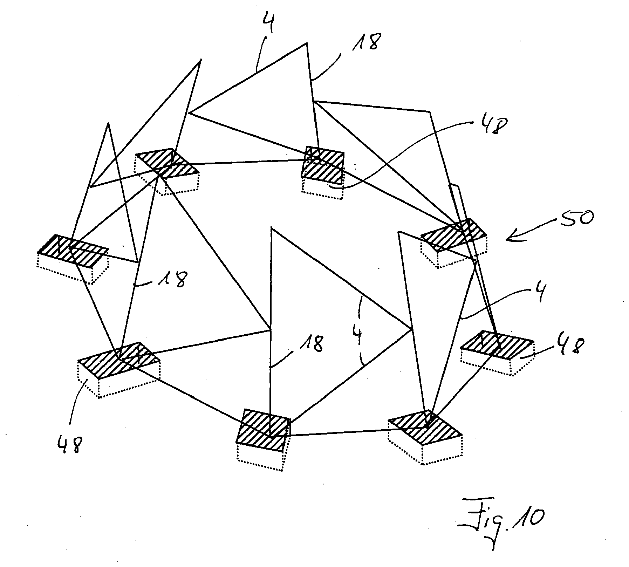

Figur 10 zeigt einen ersten Abschnitt eines Jackets 1, das an Land, also On-Shore, hergestellt werden soll. Es verfügt über acht Beine 2, von denen jeweils ein Beinsegment 18 dargestellt ist. Die Beinsegmente 18 sind mit Fundamenten 48 verbunden, die fest im Erdboden eingelassen sind. In Figur 10 ist ein Basisringsegment 50 dargestellt, das aus jeweils einem Beinsegment 18 für jedes der Beine 2 sowie jeweils zwei zwischen diesen Beinsegmenten 18 angeordneten Streben 4 besteht.

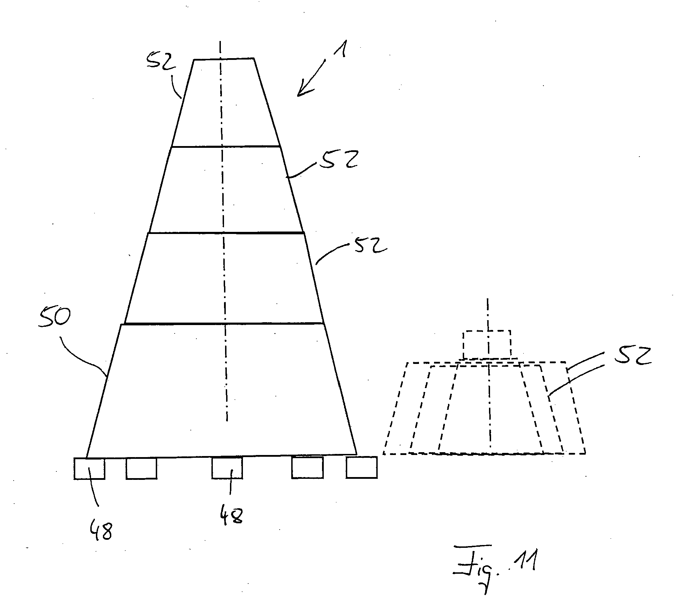

Figur 11 zeigt schematisch, wie ein derartiges On-Shore-Jacket 1 hergestellt wird. Man erkennt die Fundamente 48, auf denen sich das Basisringsegment 50 erhebt. Weitere Ringsegmente 52 sind zunächst neben dem Basisringsegment 50, in Figur 11 rechts daneben, angeordnet. Dabei stehen die einzelnen Ringsegmente 52 ineinander, was problemlos möglich ist, da sich das Jacket 1 nach oben hin verjüngt und somit jedes der Ringsegmente 52 einen unterschiedlichen Durchmesser aufweist. Zum Aufbau des Jackets 1 wird nun jeweils das äußerste der noch nicht verbauten Ringsegmente 52 angehoben und auf das jeweils letzte verbaute Ringsegment 52, zunächst also auf das Basisringsegment 50 aufgesetzt und an diesem befestigt. Auf diese Weise lässt sich einfach das komplette Jacket errichten, ohne dass für die verschiedenen Bauteile und insbesondere die Ringsegmente 52 eine große Stellfläche oder ein großer Lagerplatz nötig sind.

In einer anderen Ausführungsform dieses Verfahrens werden alle Ringsegmente 52 innerhalb des Basisringsegmentes 50 angeordnet. Dadurch wird der benötigte Platz für die Durchführung des Verfahrens weiter reduziert.

### Bezugszeichenliste

- 1: Jacket
- 2: Bein
- 4: Strebe
- 6: Knotenbereich
- 8: Ankerhülse
- 10: Gründungsrohr
- 12: Meeresboden
- 14: Verbindungselement
- 16: Turm
- 18: Beinsegment
- 20: Zwischenbereich
- 22: Anschlussstück
- 24: Innenmanschette
- 26: Sicherungsbügel
- 28: Stirnfläche
- 30: linkes Ende
- 32: erste Teilstruktur
- 34: Stütze
- 36: drittes Bein
- 38: Mittelbereich
- 40: Endstück
- 42: Ende
- 44: Knagge
- 46: Sicherung
- 48: Fundament
- 50: Basisringsegment
- 52: Ringsegment

## Patentansprüche

1. Verfahren zum Herstellen eines Jackets (1) für eine Windkraftanlage in einer aufrechten Position, wobei das Jacket (1) wenigstens drei Beine (2) einer Länge L und eine Mehrzahl von Streben (4) aufweist, die sich zwischen jeweils zwei Beinen (2) erstrecken, wobei zumindest über einen Großteil der Länge L Streben (4) zwischen den Beinen (2) angeordnet sind, die keine anderen Streben (4) kreuzen, wobei in unterschiedlichen Bereichen der Beine (2) jeweils zwei Streben (4) auf das Bein (2) treffen, die nur zu einem der benachbarten Beine (2) verlaufen und wobei sich das Jacket (1) nach oben hin verjüngt und das Jacket (1) aus einer Mehrzahl von Ringsegmenten (52) mit unterschiedlichen Durchmessern hergestellt wird, die jeweils wenigstens ein Beinsegment (18) jedes der wenigstens drei Beine (2) und wenigstens eine zwischen zwei benachbarten Beinen (2) angeordnete Strebe (4) aufweisen, wobei das Verfahren folgende Schritte aufweist:
A) Positionieren der zu verbauenden Ringsegmente (52) derart, dass jedes der Ringsegmente (52) die Ringsegmente (52) mit kleinerem Durchmesser umgibt,
B) Anheben des jeweils größten noch nicht verbauten der so positionierten Ringsegmente (52),
C) Absetzen des angehobenen Ringsegmentes (52) auf dem jeweils vorherigen Ringsegment (52),
D) Wiederholen der Schritte B) und C), bis alle Ringsegmente (52) übereinander angeordnet sind.

2. Verfahren nach Anspruch 1, **dadurch gekennzeichnet, dass** die zu verbauenden Ringsegmente (52) innerhalb eines Basisringsegmentes (50) positioniert werden.

## Claims

1. A method for producing a jacket (1) for a wind turbine wherein the jacket (1) has at least three legs (2) of a length L and multiple struts (4) which each extend between two legs (2), wherein at least over the majority of the length L struts (4) are arranged between the legs (2) which do not cross any other struts (4), wherein in each of different regions of the legs (2) two struts (4) meet the leg (2) which only extend to one of the adjacent legs (2), wherein the jacket (1) tapers upward and the jacket (1) is produced from multiple annular segments (52) with different diameters, wherein each of these annular segments has at least one leg segment (18) of each of the at least three legs (2) and at least one strut (4) arranged between two neighboring legs (2), wherein the method has the following steps:
A) positioning the annular segments (52) to be assembled in such a way that each of the annular segments (52) surrounds the annular segments (52) with a smaller diameter,
B) lifting up the respective largest unassembled annular segment (52) of the annular segments (52) positioned in this way,
C) depositing the lifted-up annular segment (52) on the respective previous annular segment (52),
D) repeating steps B) and C) until all the annular segments (52) are arranged one on top of the other.

2. The method as claimed in claim 1, **characterized in that** the annular segments (52) to be assembled are positioned inside a base annular segment (50).

## Revendications

1. Procédé de fabrication d'un treillis (1) pour une éolienne en position dressée,
dans lequel
le treillis (1) comprend au moins trois branches (2) d'une longueur L et une pluralité d'entretoises (4) s'étendant respectivement entre deux branches (2),
au moins sur une majorité de la longueur L, des entretoises (4) qui ne croisent aucune autre entretoise (4) sont disposées entre les branches (2),
deux entretoises (4) respectives qui ne s'étendent que vers l'une des branches voisines (2) rejoignent la branche (2) dans différentes zones des branches (2), et
le treillis (1) va en se rétrécissant vers le haut, et
le treillis (1) est réalisé par une pluralité de segments annulaires (52) de diamètres différents comprenant chacun au moins un segment de branche (18) de chacune desdites au moins trois branches (2) et au moins une entretoise (4) disposée entre deux branches voisines (2),
le procédé comprenant les étapes consistant à :
A) positionner les segments annulaires à assembler (52) de telle sorte que chacun des segments annulaires (52) entoure les segments annulaires (52) de plus petit diamètre,
B) soulever le plus grand segment non assemblé des segments annulaires (52) ainsi positionnés,
C) poser le segment annulaire (52) soulevé sur le segment annulaire respectif précédent (52),
D) répéter les étapes B) et C) jusqu'à ce que tous les segments annulaires soient disposés les uns au-dessus des autres.

2. Procédé selon la revendication 1,
**caractérisé en ce que**
les segments annulaires à assembler (52) sont positionnés à l'intérieur d'un segment annulaire de base (50).
